# EUROPÄISCHE PATENTANMELDUNG

(11) **EP 4 012 532 A1**
(43) Veröffentlichungstag der Anmeldung: **15.06.2022**
(21) Anmeldenummer: 21199865.3
(22) Anmeldetag: 29.09.2021
(51) Int. Cl.: G05D 1/02, A01B 1/00, A01B 79/00

(54) **VERFAHREN ZUR ERSTELLUNG VON LANDWIRTSCHAFTLICHEN MASCHINENVERBÜNDEN**

(30) Priorität: 11.12.2020 DE 102020133148
(71) Anmelder: CLAAS E-Systems GmbH, 49201 Dissen (DE)
(72) Erfinder: Uhlemann, Matthias, 49326 Melle (DE); Autermann, Ludger, 48317 Drensteinfurt (DE); Middendorf, Heiko, 33790 Halle (DE)
(74) Vertreter: CLAAS Gruppe

(57) **Zusammenfassung**

Verfahren zur Erstellung von landwirtschaftlichen Maschinenverbünden, wobei zumindest ein Maschinenverbund eine landwirtschaftliche Fläche bearbeitet, wobei der Maschinenverbund zumindest eine erste landwirtschaftliche Arbeitsmaschine umfasst, wobei Daten über die von der Maschine des Maschinenverbundes bearbeitete Teile der landwirtschaftliche Fläche erfasst werden, wobei eine weitere landwirtschaftliche Arbeitsmaschine dem Maschinenverbund während der Bearbeitung der landwirtschaftlichen Fläche hinzugefügt wird, wobei der weiteren landwirtschaftlichen Arbeitsmaschine die Daten über die von der Maschine des Maschinenverbundes bereits bearbeiteten Teile der landwirtschaftliche Fläche übermittelt werden.

## Beschreibung

Die Erfindung betrifft ein System und ein Verfahren zur Erstellung von landwirtschaftlichen Maschinenverbünden.

Aus der WO2014105930A1 ein System zu Erstellung von Maschinenverbünden bekannt.

Aufgabe der Erfindung ist es ein solches System zu verbessern.

Die Erfindung umfasst ein Verfahren zur Erstellung von landwirtschaftlichen Maschinenverbünden, wobei zumindest ein Maschinenverbund eine landwirtschaftliche Fläche bearbeitet, wobei der Maschinenverbund zumindest eine erste landwirtschaftliche Arbeitsmaschine umfasst, wobei Daten über die von der Maschine des Maschinenverbundes bearbeitete Teile der landwirtschaftliche Fläche erfasst werden, wobei eine weitere landwirtschaftliche Arbeitsmaschine dem Maschinenverbund während der Bearbeitung der landwirtschaftlichen Fläche hinzugefügt wird, wobei der weiteren landwirtschaftlichen Arbeitsmaschine die Daten über die von der Maschine des Maschinenverbundes bereits bearbeiteten Teile der landwirtschaftliche Fläche übermittelt werden.

Die Erfindung umfasst auch ein System zur Erstellung von landwirtschaftlichen Maschinenverbünden, umfassend zumindest einen Maschinenverbund, wobei der Maschinenverbund zumindest eine erste landwirtschaftliche Arbeitsmaschine umfasst, wobei die Maschinen des Maschinenverbundes dazu vorgesehen und eingerichtet sind eine landwirtschaftliche Fläche zu bearbeiten und Daten über die bearbeiteten Teile der landwirtschaftlichen Fläche zu erfassen, wobei das System zumindest eine weitere landwirtschaftliche Arbeitsmaschine umfasst, wobei das System dazu vorgesehen und eingerichtet ist die weitere landwirtschaftliche Arbeitsmaschine dem Maschinenverbund während der Bearbeitung der landwirtschaftlichen Fläche hinzuzufügen, und die Daten über die von der Maschine des Maschinenverbundes bereits bearbeiteten Teile der landwirtschaftliche Fläche der weiteren landwirtschaftlichen Arbeitsmaschine zu übermitteln.

Durch das Hinzufügen einer weiteren landwirtschaftlichen Arbeitsmaschine zu dem Maschinenverbund während der Bearbeitung der landwirtschaftlichen Fläche, wird eine besonders flexible Bearbeitung der landwirtschaftlichen Fläche möglich. Durch das Übertragen der Daten über die von der Maschine des Maschinenverbundes bereits bearbeiteten Teile der landwirtschaftlichen Fläche an die weitere Arbeitsmaschine kann die weitere Arbeitsmaschine besonders effizient in die Arbeit des Maschinenverbundes eingefügt werden.

In einer vorteilhaften Ausgestaltung wird die weitere landwirtschaftliche Arbeitsmaschine dem Maschinenverbund manuell oder durch ein Farmmanagement System hinzugefügt. Ein manuell oder durch ein Farmmanagement System durchgeführtes Hinzufügen der weiteren Arbeitsmaschine ermöglicht eine Änderung des Maschinenverbundes unabhängig von äußeren Parametern.

In einer alternativen Ausgestaltung wird die weitere landwirtschaftliche Arbeitsmaschine dem Maschinenverbund automatisch hinzugefügt. Ein automatisches Hinzufügen kann sehr schnell und bedarfsgerecht erfolgen und verhindert manuelle Fehler beim Hinzufügen der weiteren Arbeitsmaschine.

In einer vorteilhaften Ausgestaltung wird die weitere landwirtschaftliche Arbeitsmaschine dem Maschinenverbund auf Basis eines oder mehrerer gleicher Attribute hinzugefügt. Attribute auf deren Basis die Arbeitsmaschine dem Maschinenverbund hinzugefügt werden kann sind insbesondere:
a. Arbeitsmaschinen haben den gleichen Besitzer,
b. Arbeitsmaschinen arbeiten auf dem gleichen Feld,
c. Arbeitsmaschinen arbeiten am gleichen Auftrag,
d. Arbeitsmaschinen haben die gleiche Bearbeitungspraxis,
e. Arbeitsmaschinen arbeiten zur gleichen Uhrzeit.
Insbesondere durch die Kombination mehrerer gleicher Attribute kann sichergestellt werden, dass die weitere Arbeitsmaschine dem richtigen Maschinenverbund zugeordnet wird.

In einer vorteilhaften Ausgestaltung werden die Daten direkt oder über einen externen Server der weiteren Arbeitsmaschine übermittelt. Eine direkte Übermittlung ermöglicht eine Datenübertragung unabhängig von externer Infrastruktur wie Mobilfunkmasten und Servern. Eine Übermittlung über einen externen Server ermöglicht eine Datenübertragung auch wenn kein direkter Funkkontakt zwischen den Arbeitsmaschinen möglich ist. Weiterhin kann die Datenübertragung von dem Server überwacht werden. Der Server kann auch Daten über bereits von anderen Arbeitsmaschinen bearbeiteten Teilen der landwirtschaftlichen Fläche gespeichert sein, die das Feld bereits wieder verlassen haben. Auch diese Daten können an die weitere Arbeitsmaschine übermittelt werden. Bei der Nutzung eines externen Servers umfasst das System einen Server und das System ist dazu vorgesehen und eingerichtet die Daten von der ersten Arbeitsmaschine an den Server und von dem Server an die weitere Arbeitsmaschine zu übermitteln.

In einer vorteilhaften Ausgestaltung sind die erste Arbeitsmaschine und die weitere Arbeitsmaschine jeweils mit einem Geolokalisationssystem ausgestattet. Die Positionen der Arbeitsmaschinen werden mittels der Geolokalisationssysteme erfasst. Geolokalisationssysteme sind insbesondere Satellitengestützte System wie GPS, GALILEO oder GLONASS. Mit dem Geolokalisationssystem der ersten Arbeitsmaschine kann erfasst werden welche Teile der landwirtschaftlichen Fläche durch die erste Arbeitsmaschine erfasst werden. Mit dem Geolokalisationssystem der weiteren Arbeitsmaschine kann die weitere Arbeitsmaschine bestimmen, ob sie sich auf einem Teil der landwirtschaftlichen Fläche befindet, die bereits bearbeitet wurde.

In einer vorteilhaften Ausgestaltung werden die Daten in Form von Fahrspuren und Arbeitsbreiten oder als polygonale Flächen übermittelt. Daten in Form von Fahrspuren und Arbeitsbreiten lassen sich besonders einfach mit Informationen aus einem Geolokalisationssystem erstellen.

In einer vorteilhaften Ausgestaltung umfasst die weitere landwirtschaftliche Arbeitsmaschine ein Arbeitsaggregat, wobei das Arbeitsaggregat ganz und/oder teilweise aktiviert bzw. deaktiviert werden kann, wobei das Arbeitsaggregat basierend auf den ausgetauschten Daten automatisch ganz oder teilweise aktiviert bzw. deaktiviert wird. Durch ein automatisches Aktivieren bzw. deaktivieren des Arbeitsaggregates kann die weitere Arbeitsmaschine automatisch darauf reagieren ob sie auf einem bereits bearbeiteten Teil der landwirtschaftlichen Fläche steht oder auf einem unbearbeiteten Teil der landwirtschaftlichen Fläche. Ein Arbeitsaggregat das teilweise aktiviert bzw. deaktiviert werden kann ermöglicht eine flexible Reaktion. So können von der weiteren Arbeitsmaschine nur die benötigten Teile des Arbeitsaggregates aktiviert werden und de unbenötigten Teile des Arbeitsaggregates deaktiviert werden.

Das Arbeitsaggregat kann bspw. eine Spritze oder eine mechanische Hacke oder ein Düngerstreuer oder eine Sämaschine sein. In einer besonders vorteilhaften Ausgestaltung umfasst das Arbeitsaggregat mehrere aktivierbare Sektionen, wobei die weitere Arbeitsmaschine dazu vorgesehen und eingerichtet ist die Sektionen zu aktivieren bzw. zu deaktivieren.

Ein Aktivieren einer Sektion bedeutet, dass die Sektion die landwirtschaftliche Fläche bearbeitet. Ein Deaktivieren einer Sektion bedeutet, dass die Sektion keine Arbeit verrichtet. Ist das Arbeitsaggregat bspw. eine Hacke, so bedeutet ein Deaktivieren, dass eine Sektion der Hacke angehoben wird und ein Aktivieren, dass eine Sektion der Hacke auf den Boden abgesenkt wird. Ist das Arbeitsaggregat bspw. eine Spritze, so bedeutet ein Aktivieren, dass eine Sektion der Spritze ein Betriebsmittel ausbringt und ein Deaktivieren bedeutet, dass eine Sektion der Spritze keine Betriebsmittel ausbringt.

Wann eine Sektion aktiviert bzw. deaktiviert wird hängt von den übermittelten Daten und der zu verrichtenden Arbeit der weiteren Arbeitsmaschine ab. Verrichtet die weitere Arbeitsmaschine die gleiche Arbeit wie die erste Arbeitsmaschine, so werden die Teile des Arbeitsaggregates so aktiviert bzw. deaktiviert, dass das zweite Arbeitsaggregat nur Flächen bearbeitet, die nicht als bearbeitet übermittelt wurden. Verrichtet die weitere Arbeitsmaschine eine Arbeit, die nach der Arbeit der ersten Arbeitsmaschine verrichtet werden soll, so werden die Teile des Arbeitsaggregates so aktiviert bzw. deaktiviert, dass das zweite Arbeitsaggregat nur Flächen bearbeitet, die als bearbeitet übermittelt wurden.

In einer vorteilhaften Ausgestaltung ist das System dazu vorgesehen und eingerichtet eine Vielzahl von Arbeitsmaschinen während der Bearbeitung der landwirtschaftlichen Fläche dem Maschinenverbund hinzuzufügen. Der Maschinenverbund kann so jederzeit erweitert werden.

Die Erfindung wird nachstehend anhand eines Ausführungsbeispiels näher erläutert. Die Figuren zeigen in
- Fig. 1:: eine erste Arbeitsmaschine auf einer landwirtschaftlichen Fläche,
- Fig. 2:: einen Maschinenverbund auf einer landwirtschaftlichen Fläche mit einer ersten Arbeitsmaschine und einer weiteren Arbeitsmaschine,
- Fig. 3:: einen Maschinenverbund aus zwei Arbeitsmaschinen auf einer landwirtschaftlichen Fläche und einen Server,
- Fig. 4:: einen Maschinenverbund auf einer landwirtschaftlichen Fläche mit einer ersten Arbeitsmaschine und einer weiteren Arbeitsmaschine und einen Server.

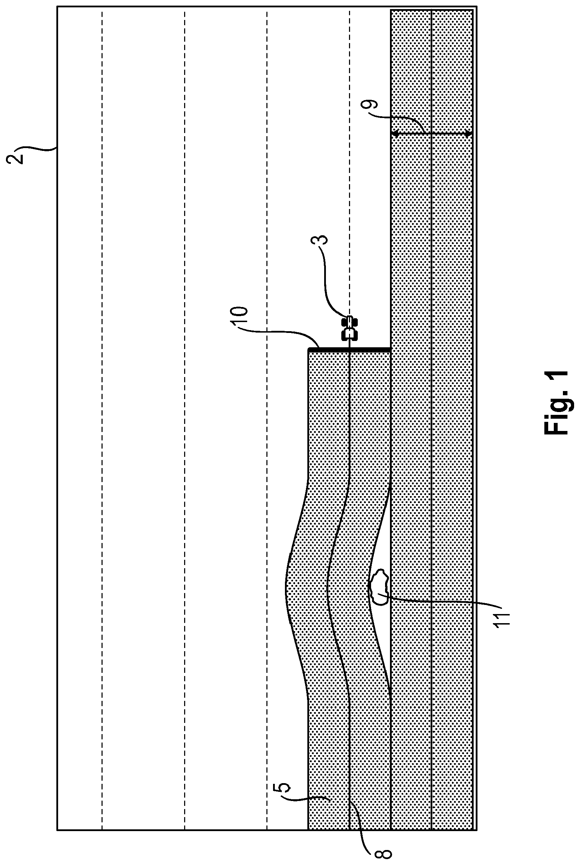

Figur 1 zeigt eine erste Arbeitsmaschine 3 auf einer landwirtschaftlichen Fläche 2. Die Arbeitsmaschine 3 ist mit einem Arbeitsaggregat 10, hier eine Spritze zur Ausbringung von Pflanzenschutzmitteln, mit einer festen Arbeitsbreite 9 ausgestattet. Die erste Arbeitsmaschine 3 erfasst während der Arbeit Daten über die von der ersten Arbeitsmaschine 3 bearbeiteten Teile 5 der landwirtschaftlichen Fläche 2. Dazu wird mittels eine Geolokalisationssystems (nicht dargestellt), bspw. GPS, GLONAS oder GALILEO, die Fahrspur 8 der Arbeitsmaschine 3 aufgezeichnet. Aus der Fahrspur 8 und der Arbeitsbreite 9 kann die bearbeitete Teile 5 der landwirtschaftlichen Fläche 2 bestimmt werden. Die erste Arbeitsmaschine 3 umfährt in diesem Beispiel ein Hindernis 11. Dadurch sind die die Fahrspuren 8 nicht äquidistant zu einander.

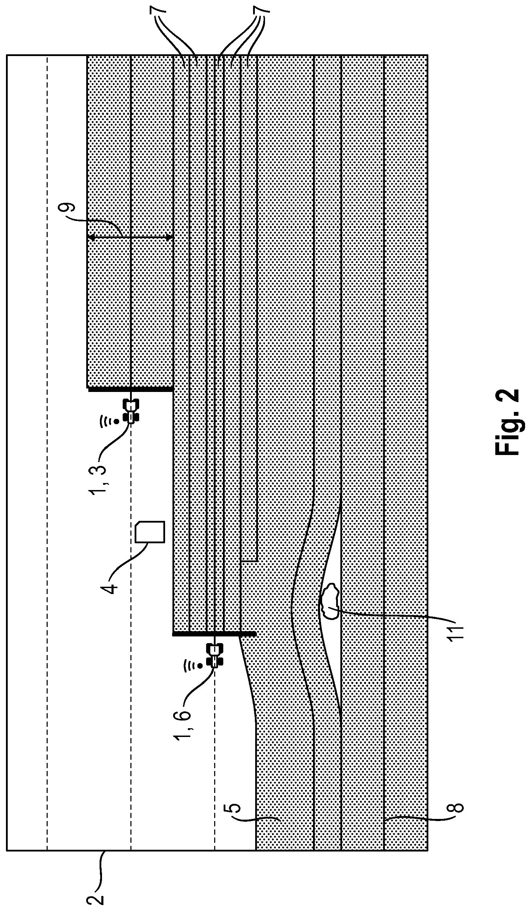

Figur 2 zeigt zwei Arbeitsmaschinen 3, 6 eines Maschinenverbundes 1. Der Maschinenverbund besteht aus der ersten Arbeitsmaschine 3 und einer weiteren Arbeitsmaschine 6. Die Arbeitsmaschinen 3, 6 befinden sich auf derselben landwirtschaftlichen Fläche 2 wie in Figur 1. Die weitere Arbeitsmaschine 6 wird während der Bearbeitung der landwirtschaftlichen Fläche 2 durch die erste Arbeitsmaschine 3 dem Maschinenverbund hinzugefügt. Nach der Hinzufügung der weiteren Arbeitsmaschine 6 zu dem Maschinenverbund 1 werden die Daten 4 über die bearbeiteten Teile 5 der landwirtschaftlichen Fläche 2 an die weitere Arbeitsmaschine 6 übertragen. Die Daten können dabei die Fahrspur 8 und die Arbeitsbreite 9 umfassen. Alternativ oder zusätzlich kann aus der Fahrspur 8 und der Arbeitsbreite 9 eine polygonale Fläche berechnet werden und diese übertragen werden.

Die weitere Arbeitsmaschine 6 ist ebenfalls mit einem Arbeitsaggregat 10 ausgestattet. Das Arbeitsaggregat 10 der weiteren Arbeitsmaschine 6 ist eine Spritze die teilweise aktiviert bzw. deaktiviert werden kann. Dazu ist die Spritze in eine mehrere aktivierbare Sektionen 7 unterteilt, wobei die Sektionen 7 einzeln aktiviert bzw. deaktiviert werden können. Dadurch ist es nicht notwendig die Fahrspur der weiteren Arbeitsmaschine an die bereits von der ersten Arbeitsmaschine 3 bearbeiteten Teile 5 der landwirtschaftlichen Fläche 2 anzupassen. Stattdessen kann die weitere Arbeitsmaschine 6 einer geraden Fahrspur folgen und durch die Deaktivierung einzelner Sektionen 7 eine Doppelbearbeitung vermeiden.

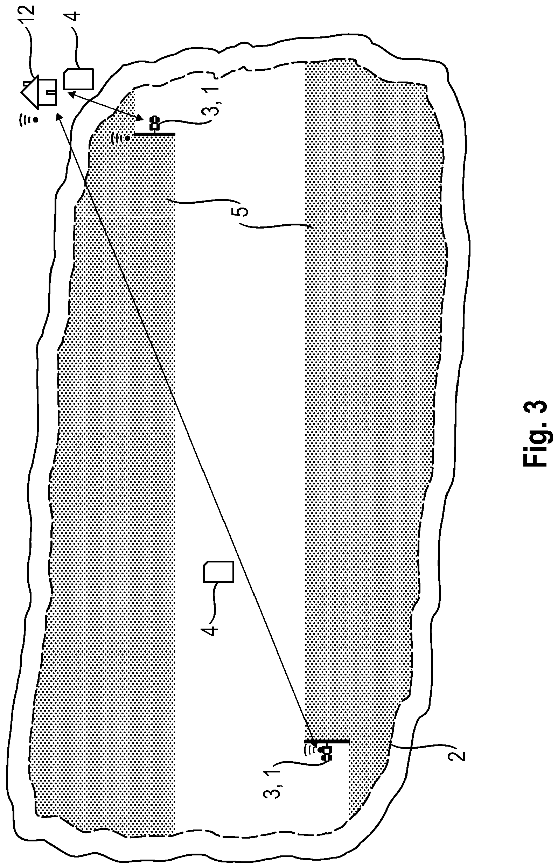

Figur 3 zeigt einen Maschinenverbund 1 aus zwei Arbeitsmaschinen 3 auf einer landwirtschaftlichen Fläche 2. Die beiden Arbeitsmaschinen 3 des Maschinenverbundes 1 bereiten das Saatbeet auf der Fläche 2 vor. Beide Arbeitsmaschinen 3 schicken Daten 4 über bearbeitete Teile 5 der landwirtschaftlichen Fläche 2 an einen externen Server 12. Der Server 12 leitet die Daten 4 an die jeweils andere Arbeitsmaschine 3 weiter, damit diese eine doppelte Bearbeitung vermeiden.

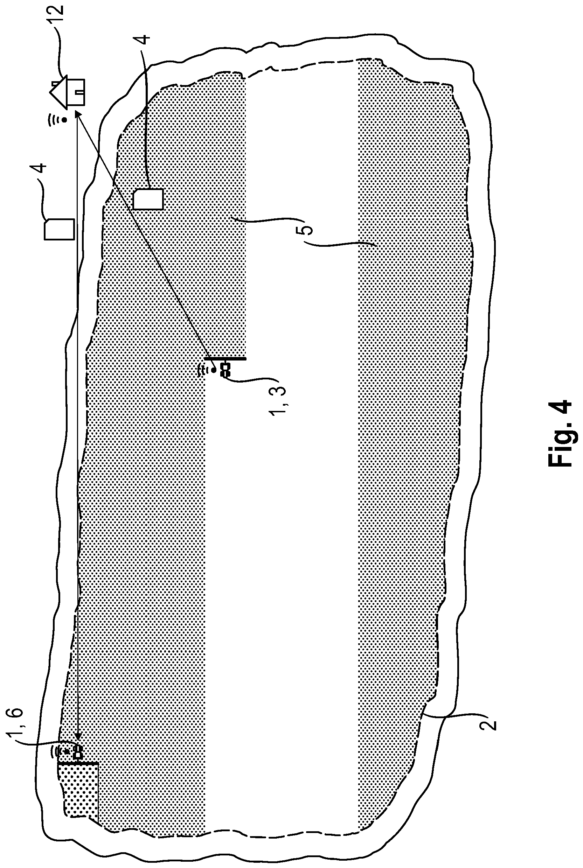

Figur 4 zeigt die selber landwirtschaftliche Fläche 2 wie Figur 3. Eine weitere Arbeitsmaschine 6 wurde dem Maschinenverbund 1 hinzugefügt. Die weitere Arbeitsmaschine 6 bringt die Aussaat in das vorbereitete Saatbeet aus. Die von den beiden ersten Arbeitsmaschinen 3 an den Server 12 übermittelten Daten 4 schickt der Server 12 weiter an die weitere Arbeitsmaschine 6. Die weitere Arbeitsmaschine 6 ist dadurch in der Lage die Aussaat nur dort auszubringen wo die ersten Arbeitsmaschinen 3 das Saatbeet vorbereitet haben. Eine der ersten Arbeitsmaschinen 3 hat die landwirtschaftliche Fläche 2 bereits verlassen. Da die Daten 4 allerdings an den Server 12 übermittelt wurden, sind die anderen Maschinen 3, 6 über die bearbeiteten Teile 5 informiert.

### Bezugszeichenliste

- 1: Maschinenverbund
- 2: Landwirtschaftliche Fläche
- 3: Erste Arbeitsmaschine
- 4: Daten
- 5: Bearbeitete Teile
- 6: Weitere Arbeitsmaschine
- 7: Sektionen
- 8: Fahrspur
- 9: Arbeitsbreite
- 10: Arbeitsaggregat
- 11: Hindernis
- 12: Server

## Patentansprüche

1. Verfahren zur Erstellung von landwirtschaftlichen Maschinenverbünden,
wobei zumindest ein Maschinenverbund (1) eine landwirtschaftliche Fläche (2) bearbeitet,
wobei der Maschinenverbund (1) zumindest eine erste landwirtschaftliche Arbeitsmaschine (3) umfasst,
wobei Daten (4) über die von der ersten Maschine (3) des Maschinenverbundes (1) bearbeitete Teile (5) der landwirtschaftliche Fläche (2) erfasst werden, **dadurch gekennzeichnet, dass** eine weitere landwirtschaftliche Arbeitsmaschine (6) dem Maschinenverbund (1) während der Bearbeitung der landwirtschaftlichen Fläche (2) hinzugefügt wird,
wobei der weiteren landwirtschaftlichen Arbeitsmaschine (6) die Daten (4) über die von der ersten Maschine (3) des Maschinenverbundes (1) bereits bearbeiteten Teile (5) der landwirtschaftliche Fläche (2) übermittelt werden.

2. Verfahren nach Anspruch 1, **dadurch gekennzeichnet, dass** die weitere landwirtschaftliche Arbeitsmaschine (6) dem Maschinenverbund (1) manuell oder durch ein Farmmanagement System hinzugefügt wird.

3. Verfahren nach Anspruch 1, **dadurch gekennzeichnet, dass** die weitere landwirtschaftliche Arbeitsmaschine (6) dem Maschinenverbund (1) automatisch hinzugefügt wird.

4. Verfahren nach Anspruch 3, , **dadurch gekennzeichnet, dass** die weitere landwirtschaftliche Arbeitsmaschine (6) dem Maschinenverbund (1) auf Basis eines oder mehrerer gleicher Attribute hinzugefügt wird, wobei die Attribute insbesondere sind:
a. Arbeitsmaschinen (3, 6) haben den gleichen Besitzer,
b. Arbeitsmaschinen (3, 6) arbeiten auf dem gleichen Feld,
c. Arbeitsmaschinen (3, 6) arbeiten am gleichen Auftrag,
d. Arbeitsmaschinen (3, 6) haben die gleiche Bearbeitungspraxis,
e. Arbeitsmaschinen (3, 6) arbeiten zur gleichen Uhrzeit.

5. Verfahren nach einem der vorhergehenden Ansprüche, **dadurch gekennzeichnet, dass** die Daten (4) direkt oder über einen externen Server (12) der weiteren Arbeitsmaschine (6) übermittelt werden.

6. Verfahren nach einem der vorhergehenden Ansprüche,
**dadurch gekennzeichnet, dass** die Positionen der Arbeitsmaschinen (3, 6) mittels Geolokalisationssystemen erfasst werden.

7. Verfahren nach einem der vorhergehenden Ansprüche,
**dadurch gekennzeichnet, dass** die Daten (4) in Form von Fahrspuren (8) und Arbeitsbreiten (9) oder als polygonale Flächen übermittelt werden.

8. Verfahren nach einem der vorhergehenden Ansprüche, **dadurch gekennzeichnet, dass**
die weitere landwirtschaftliche Arbeitsmaschine (6) ein Arbeitsaggregat (10) umfasst,
wobei das Arbeitsaggregat (10) ganz und/oder teilweise aktiviert bzw. deaktiviert werden kann,
wobei das Arbeitsaggregat (10) basierend auf den übermittelten Daten (4) automatisch ganz oder teilweise aktiviert bzw. deaktiviert wird.

9. System zur Erstellung von landwirtschaftlichen Maschinenverbünden, umfassend zumindest einen Maschinenverbund (1),
wobei der Maschinenverbund (1) zumindest eine erste landwirtschaftliche Arbeitsmaschine (3) umfasst,
wobei die Maschinen des Maschinenverbundes (1) dazu vorgesehen und eingerichtet sind eine landwirtschaftliche Fläche (2) zu bearbeiten und Daten (4) über die bearbeiteten Teile (5) der landwirtschaftlichen Fläche (2) zu erfassen,
**dadurch gekennzeichnet, dass**
das System zumindest eine weitere landwirtschaftliche Arbeitsmaschine (6) umfasst,
wobei das System dazu vorgesehen und eingerichtet ist die weitere landwirtschaftliche Arbeitsmaschine (6) dem Maschinenverbund (1) während der Bearbeitung der landwirtschaftlichen Fläche (2) hinzuzufügen,
und die Daten (4) über die von der ersten Maschine (3) des Maschinenverbundes (1) bereits bearbeiteten Teile (5) der landwirtschaftliche Fläche (2) der weiteren landwirtschaftlichen Arbeitsmaschine (6) zu übermitteln.

10. System nach Anspruch 9,
**dadurch gekennzeichnet, dass** die weitere Arbeitsmaschine (6) ein Arbeitsaggregat (10) umfasst, wobei das Arbeitsaggregat (10) ganz oder teilweise aktiviert bzw. deaktiviert werden kann, wobei die weitere Arbeitsmaschine (6) dazu vorgesehen und eingerichtet ist das Arbeitsaggregat (10) in Abhängigkeit von den übermittelten Daten (4) ganz oder teilweise zu aktivieren bzw. zu deaktivieren.

11. System nach Anspruch 10,
**dadurch gekennzeichnet, dass** das Arbeitsaggregat (10) mehrere aktivierbare Sektionen (7) umfasst, wobei die weitere Arbeitsmaschine (6) dazu vorgesehen und eingerichtet ist die Sektionen (7) zu aktivieren bzw. zu deaktivieren.

12. System nach einem der Ansprüche 9 bis 11,
**dadurch gekennzeichnet, dass** die erste Arbeitsmaschine (3) und die weitere Arbeitsmaschine (6) jeweils mit einem Geolokalisationssystem ausgestattet sind.

13. System nach einem der Ansprüche 9 bis 12,
**dadurch gekennzeichnet, dass** das System dazu vorgesehen und eingerichtet ist die Daten (4) in Form einer Fahrspur (8) und einer Arbeitsbreite (9) oder in Form einer polygonalen Fläche zu übermitteln.

14. System nach einem der Ansprüche 9 bis 13,
**dadurch gekennzeichnet, dass** das System einen Server (12) umfasst und das System dazu vorgesehen und eingerichtet ist die Daten (4) von der ersten Arbeitsmaschine (3) an den Server (12) und von dem Server (12) an die weitere Arbeitsmaschine (6) zu übermitteln.

15. System nach einem der Ansprüche 9 bis 14,
**dadurch gekennzeichnet, dass** das Arbeitsaggregat (10) eine Spritze oder eine mechanische Hacke oder ein Düngerstreuer oder eine Sämaschine ist.

16. System nach einem der Ansprüche 9 bis 15,
**dadurch gekennzeichnet, dass** das System dazu vorgesehen und eingerichtet ist eine Vielzahl von Arbeitsmaschinen (3, 6) während der Bearbeitung der landwirtschaftlichen Fläche (2) dem Maschinenverbund (1) hinzuzufügen.
